# EUROPEAN PATENT APPLICATION

(11) **EP 1 296 247 A1**
(43) Date of publication of application: **26.03.2003**
(21) Application number: 01410117.4
(22) Date of filing: 19.09.2001
(51) Int. Cl.: G06F 11/34

(54) **Method and apparatus for monitoring the activity of a system**

(71) Applicant: Hewlett-Packard Company (a Delaware corporation), Palo Alto, CA 94304 (US)
(72) Inventor: Sauvage, Pierre, 38450 Notre Dame de Commiers (FR); Draperi, François, 38130 Echirolles (FR)
(74) Representative: Lloyd, Richard Graham (GB)

(57) **Abstract**

A method of monitoring the activity of a system, comprising:
a) procuring a range of expected values of a time-dependent variable of the system, the range having upper and lower limits relating to expected operating parameters of the system;
b) procuring an actual value of the system's time-dependent variable, and
c) comparing the actual value with the expected range.

## Description

### Background to and Field of the Invention

This invention relates to a method of monitoring the activity of a system, a method of monitoring the activity of a computer system, apparatus for monitoring the activity of a system and apparatus for monitoring the activity of a computer system.

In particular, although by no means exclusively, the invention relates to a method and apparatus which, when used in relation to a computer system, are operative to detect abnormal or unexpected levels of activity which may be indicative of an actual, potential or imminent problem with the system's operation.

US 5,561,610 (Caterpillar Inc) discloses an apparatus and method for indicating a fault condition in a machine which identifies a trend in the level of certain machine performance parameters, calculates the duration and slope of the trend, and determines whether a warning threshold is exceeded by comparing the duration and slope of live parameters with the duration and slope of the trend.

US'610 relates, in particular, to the measurement and analysis of operating conditions of work machines such as hydraulic excavators and the like, whereas US 5,991,707 (Hydrotec Systems Company, Inc) is more pertinent to the field of computer systems.

US'707 discloses a method and system that diagnoses system reliability problems by determining the values of at least one kind of operating parameter of the system and generating a mean set of these values. From this, the probability of whether a given (live) deviant value is acceptable, is approaching a point outside of the good operating range condition or is likely to enter the range of possible system failure.

However, neither US'610 nor US'707 disclose any facility whereby a plurality of time-dependant variables may be taken into account, and which is sufficiently versatile to allow the activity of a number of computer sub-systems to be monitored.

It is thus an object of the present invention to provide an improved method of and apparatus for monitoring the activity of a system and, particularly, to provide an improved method of and apparatus for monitoring the activity of a computer system.

### Summary of the Invention

In accordance with a first aspect of the present invention, there is provided a method of monitoring the activity of a system, comprising:
a) procuring a range of expected values of a time-dependent variable of the system, the range having upper and lower limits relating to expected operating parameters of the system;
b) procuring an actual value of the system's time-dependent variable, and
c) comparing the actual value with the expected range.

The range may be evaluated using a combination of at least two temporal models.

The temporal models may have different timescales, and the range may conveniently be based on the sum of the models.

In this way, the activity of the system may be monitored on a substantially continuous basis, with (for example) expected hour-by-hour or day-by-day activity profiles being used in conjunction with (for example) underlying monthly or annual trends.

As will be appreciated, this allows the monitoring to take account of expected peaks and troughs in the system's activity levels, on a number of different timescales. Thus, in the case of an office Intranet, it is reasonable to assume that the level of network traffic will be fairly consistent between, say, 9am and 5pm, but that a drop in the level will be apparent between, say, 12pm and 2pm. In hand with that, it could be expected that the daily level of activity will be generally consistent from Monday to Friday, but that a drop will occur over the weekend. By combining two or more such temporal (time-related) models, it is possible to derive an accurate image - or profile - of the expected levels of the system's activity, over a period of time.

Preferably, a temporal sequence of ranges is procured, with a plurality of actual values of the time-dependent variable conveniently being compared sequentially therewith.

Ranges of expected values may be procured for a plurality of different time-dependent variables whereby substantially simultaneous monitoring of different elements of the system may be effected.

Conveniently, the method further comprises a scaling operation whereby the scales of the expected range and actual value are brought into conformity with one another. As will be appreciated, this enables the expected ranges to be determined, initially, using a different scale to that with which the actual value is determined.

In hand with that, the expected range and/or the actual value may be filtered, averaged or otherwise processed in order to ensure operating compatibility with each other.

The comparison may occur substantially in real-time, whereby the current activity of the system may be monitored.

Preferably, an advisory signal is generated in the event that the actual value falls outside the expected range, whereby appropriate remedial action may be taken.

The advisory signal may comprise, or may cause the generation of, an alarm signal.

The expected values may correspond to a normal level of activity of the system, and may thus be evaluated, at least in part, on the basis of previous actual values.

The expected values preferably are alterable, whereby account may be taken of exceptional circumstances likely to affect an otherwise normal level of activity.

Although it is envisaged that the invention may find uses in a wide variety of different types of system, it is specifically envisaged by the applicants that the invention will be particularly well-suited to the monitoring of the activity of a computer system.

In this regard, the time-dependent variable preferably is associated with one of the system's processor, memory, non-volatile data storage devices and network capabilities.

From this, it will be understood by those well-versed in the relevant art that the invention, in its various guises, allows abnormal levels of processor operation, memory allocation, memory read/write activity, disk usage and network traffic to be detected, on a substantially real-time basis. In consequence, actual, potential or imminent failures, as well as other operating defects or slow-downs, can be predicted, allowing appropriate remedial or preventative action to be taken.

In accordance with a second aspect of the present invention, there is provided a method of monitoring the activity of a computer system, comprising:
a) procuring a range of expected values of a time-dependent variable of the system, the range having upper and lower limits relating to expected operating parameters of the system;
b) procuring an actual value of the system's time-dependent variable, and
c) comparing the actual value with the expected range.

The range may be evaluated using a combination of at least two temporal models, whereby abnormal levels of activity, suggestive of system or system element overload or failure, may be detected.

The invention, in its second aspect, may comprise one or more of the features of the first aspect of the invention.

In accordance with a third aspect of the present invention, there is provided a method of monitoring the activity of a computer system, whereby system failure, overload, component failure or performance loss may be predicted, comprising:
a) procuring a range of expected values of a time-dependant variable of the system such as data processing speed, memory usage/allocation, network activity and storage device usage/activity, the range having upper and lower limits relating to expected operating parameters of the system, whereby a normal level of activity may be established;
b) procuring an actual and/or real-time value of the system's time-dependent variable;
c) comparing the actual and/or real-time value with the expected range to establish whether the system is operating at a normal level of activity and, in the event that the system is found not to be operating at a normal level;
d) generating an advisory signal such as an alarm, whereby appropriate remedial action may be taken.

The remedial action may involve at least one of a system restart, a system switchover and an expected range override.

The invention, in its third aspect, may comprise one or more of the features of the first and second aspects.

In accordance with a fourth aspect of the present invention, there is provided apparatus for monitoring the activity of a system, comprising;
a) a range procurement element operative to procure a range of expected values of a time-dependent variable of the system, the range having upper and lower limits relating to expected operating parameters of the system,
b) an actual element procurement element operative to procure an actual value of the system's time-dependent variable, and
c) a comparator element operative to compare the actual value with the expected range.

The invention, in its fourth aspect, may comprise one or more of the features of the first three aspects.

In accordance with a fifth aspect of the present invention, there is provided apparatus for monitoring the activity of a computer system and thus to predict system failure, overload, component failure or performance loss, for example, comprising:
a) a range procurement element operative to procure a range of expected values of a time-dependent variable of the system such as data processing speed, memory usage/allocation, network activity and storage device usage/activity, the range having upper and lower limits relating to expected operating parameters of the computer system, whereby a normal level of activity may be established;
b) an actual value procurement element operative to procure an actual and/or real-time value of the computer system's time dependent variable;
c) a comparator element operative to compare the actual and/or real-time value with the expected range, to establish whether the system is operating at a normal level of activity, and
d) an advisory signal generator which, in the event that the system is found not to be operating at a normal level, is operative to generate an advisory signal such as an alarm, to allow appropriate remedial action to be taken.

The invention, in its fifth aspect, may comprise one or more of the features of the first four aspects of the present invention.

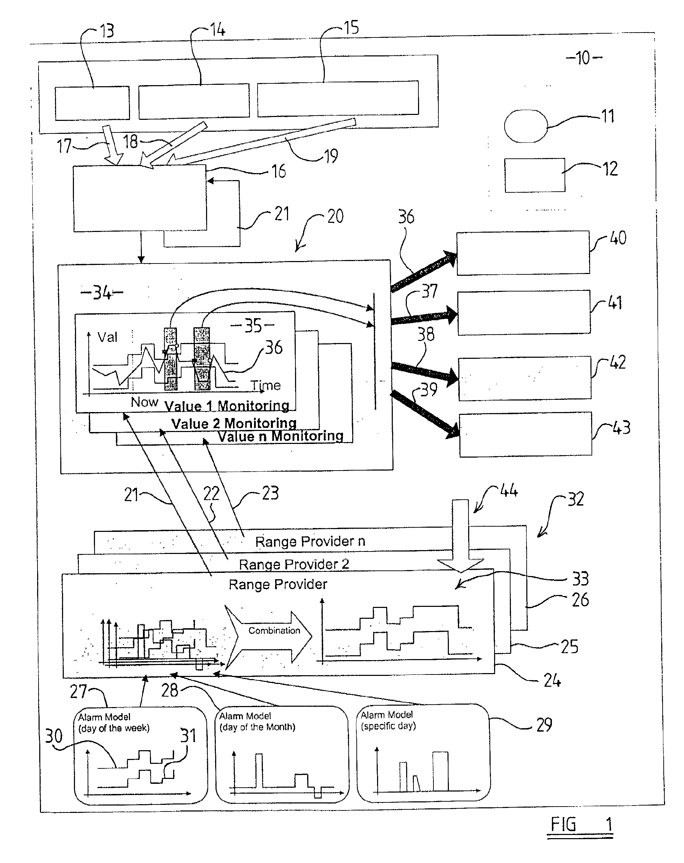

### Brief Description of the Drawing

Various embodiments and characteristics of the invention will now be described in greater detail, but strictly by way of example only, by reference to the accompanying drawing, which provides, in schematic form, an illustration of the way in which the activity of a computer system may be monitored.

### Detailed Description of the Drawing and Best Mode of the Invention

The drawing shows, in schematic form, how a time-dependent variable of a computer system 10 can be monitored on a substantially real-time basis so as to allow predictive diagnosis of actual, potential or imminent system problems.

In a computer system environment, it is often necessary - or at least beneficial - to monitor a number of different time-dependent variables such as the "busyness" of a CPU or other processor (i.e. the rate at which it is processing data, relative to its maximum theoretical processing rate), the amount of processing capability being used by a particular computing process, the amount of memory currently being used, the level of disk activity and the amount of network traffic being handled, for example. Each of these variables may be subject to substantial fluctuation during an operating cycle of the system concerned, with unexpectedly high or low levels of activity of the system suggesting that a problem may have arisen, or that a problem is likely to arise.

The present invention provides a method and arrangement which allows the value of such variables to be monitored on a substantially continuous basis, and for these values to be compared with a theoretical range defined by operating maxima and minima which delimit an acceptable span of values which relate to normal activity of the system concerned.

Specifically, the invention allows monitoring of files 11 and processes 12 to be effected, with file monitoring perhaps being required on an on-going basis to ensure that the size of a particular file is maintained within acceptable bounds. More likely, however, is that the operation of a particular process 12 will need to be monitored closely, and a number (in this case three) of value monitors 13, 14 and 15 are thus provided, to assimilate and forward to a value processor 16 a stream of time-dependent values 17, 18 and 19. The value monitor 13 may comprise an Operating System kernel, the value monitor 14 may comprise a commercially available system management tool (such as Hewlett Packard's "MI Deamon"), and the value monitor 15 may be provided by commercially available instrumentation which is specific to the process being monitored.

The value processor 16 is operative to forward the values to an alarm generator element 20, conveniently subsequent to a scaling routine 21, effective to ensure that the forwarded values are in a format - or of such a scale - that is readily comprehensible by the alarm generator element 20.

The alarm generator 20 is fed expected range information 21, 22 and 23 from a number (in this case three) of range procurement elements 24, 25 and 26 which in turn are supplied with data from different temporal models 27, 28 and 29.

As shown, model 27 illustrates, on a daily, how the activity of the computer system concerned is likely to vary, with the upper and lower limits 30 and 31 representing the expected normal operating parameters of the system, throughout the week. In contrast, the temporal model 28 shows how the system's activity is likely to vary over the course of a given month, whereas temporal model 29 shows how the system's activity is likely to fluctuate over the course of a single day. As will be appreciated, each of the models 27, 28 and 29 can be arrived at in a variety of ways, with the simplest being to take account of an appropriate stream of previous values of the variables being monitored, thus establishing a normal pattern of activity which, be definition, is expected also to occur during future operating cycles.

In order to establish combined ranges of expected values of the time dependent variables concerned, a range provider element 32 is operative to combine the models 27, 28 and 29, with the addition process resulting in an aggregate range 33 which is specific to the particular variable being monitored.

As shown by the numerals 21, 22 and 23, different variables of the system concerned may have different associated expected ranges, with each of these ranges having been arrived at by the combination step performed by the range provider 32. Thus, the expected range 21 may relate to the operating speed of the system's CPU, the expected range 22 may relate to the amount of memory being used at a given time, whereas the expected range 23 may be associated with the amount of network traffic received by, generated within, or passing through the system being monitored.

The alarm generator element 20 contains within it a comparator element 34 which compares the steams of values emanating from the value processor 16 with the appropriate expected range received from the range provider 32.

During normal use, the actual values of the variables concerned will fall within the expected ranges 21, 22 and 23, although, as shown by the time/value chart 35, instances may arise where the actual values 36 exceed or fall below the expected range concerned. When this occurs, the comparator element, in conjunction with the alarm generator element 20, generates an alarm signal which, as shown by the arrows 36 to 39, can result in an audible alarm 40 being triggered, a system restart 41 being effected, a system switchover 42 (engaging back-up components) being initiated, or alternative (unspecified) remedial action 43 being taken.

It will be understood that, in most circumstances, the experience-based temporal models 27, 28 and 29 will allow the monitoring method and arrangement to function quite satisfactorily, but that there may be occasions where it is inappropriate to apply a standard "normal" temporal model. For example, where the system being monitored is associated with an ISP server or data portal, or where the system being monitored is allied with a telecommunications system, exceptional events such as New Year's Day, Christmas Day and the like may give rise to unexpectedly high service demand, and hence to exceptionally high levels of system activity. To allow for this, an override facility illustrated generally at 44 is provided, whereby a system administrator, for example, may manually increase the size of the expected range (or, at least, increase the upper limits of the range concerned) so that the exceptional - although anticipated - rise in service demand and system activity does not erroneously generate an alarm signal, as would otherwise be the case.

From the foregoing, it will be understood that the invention provides an effective method and apparatus for monitoring the activity of a (computer) system, and that, in particular, the invention allows substantially real-time monitoring of a plurality of time-dependent variables to be effected. In order for the method and apparatus to function satisfactorily, it is of course necessary to ensure that the temporal models 27, 28 and 29, from which the expected ranges 21, 22 and 23 are derived, to be accurate, and up-to-date. To provide this, the temporal models may continually be updated, with the thus-updated temporal information being passed to the range provider 32 on an appropriately frequent basis. Thus, in rapidly changing system environments such as ISP systems, it may be appropriate to update at least some of the temporal models on a near-continuous basis, although it will be understood that a degree of flexibility exists in this respect.

It will also be understood that, whilst the specific embodiment described above relates to the application of the invention in a computer system environment, the invention, in its broadest sense, also lends itself to application in a number of differing fields. For example, the invention could be used to detect abnormal entrance/exit behaviour in entrance/exit software of the kind used in corporate buildings, or in engine management systems of the kind currently found in most road vehicles. Similarly, human traffic flow in educational environments such as schools can be monitored, on the understanding that the flow of people is likely to peak every hour or so (when classes begin and end). Thus, an unexpectedly high level of flow between these times suggests that an abnormal situation, such as a security incident, fire, strike or even riot has occurred.

In urban environments, vehicular traffic can be monitored, using a traffic model incorporating temporal models relating to dates, times and exceptional events such as processions, concerts, demonstrations and road works, for example. Such monitoring can thus be effective to detect traffic accidents, traffic light failures and other such unexpected events.

Urban water consumption may also be monitored in this way, with the temporal models being associated with the time of day, holidays and the like, the models being used to produce an expected consumption rate, over time. The invention, in this application, can thus be used to detect mains leakages, excessive use or unexpectedly low use, which may indicate pumping or supply problems.

In industry, the invention can be used to detect abnormal usage levels of a variety of products including coffee consumption and raw material usage. In the first example, it is expected that usage will be high between, say, 8 a.m. and 9 a.m. but high levels at 11 a.m. may indicate machinery failure, industrial action or supply chain problems. In the chemical industry, high raw material usage may be expected at the start of a production run (or week) as a re-start of production requires tanks to be filled, in readiness. However, comparably high usage later during the production run could indicate a leak or an erroneous re-start of production. In a confectionery environment, it could be expected that chocolate usage would increase dramatically in the run-up to the Christmas period. If this does not happen, it may mean that ordering problems have arisen or that some product shortages exist.

Overall, however, the invention, in its broadest aspect, allows problems to be detected very shortly after they arise, by monitoring the activity of a system that will be affected by them. In this way, it is possible to anticipate the consequences of the problem, before irreparable damage or disruption is caused.

In the present specification "comprises" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of monitoring the activity of a system, comprising:
a) procuring a range of expected values of a time-dependent variable of the system, the range having upper and lower limits relating to expected operating parameters of the system;
b) procuring an actual value of the system's time-dependent variable, and
c) comparing the actual value with the expected range.

2. A method according to Claim 1 wherein the range is evaluated using a combination of at least two temporal models.

3. A method according to Claim 2 wherein the temporal models have different timescales.

4. A method according to Claim 2 or Claim 3 wherein the range is based on the sum of the models.

5. A method according to any one of the preceding claims wherein a temporal sequence of ranges is procured and wherein a plurality of actual values of the time-dependent variable is compared sequentially therewith.

6. A method according to any one of the preceding claims wherein ranges of expected values are procured for a plurality of different time-dependent variables whereby substantially simultaneous monitoring of different elements of the system may be effected.

7. A method according to any one of the preceding claims further comprising a scaling operation whereby the scales of the expected range and actual value are brought into conformity with one another.

8. A method according to any one of the preceding claims wherein the comparison occurs substantially in real-time, whereby the current activity of the system may be monitored.

9. A method according to any one of the preceding claims wherein an advisory signal is generated in the event that the actual value falls outside the expected range, whereby appropriate remedial action may be taken.

10. A method according to Claim 9 wherein the advisory signal comprises, or causes the generation of, an alarm signal.

11. A method according to any one of the preceding claims wherein the expected values correspond to a normal level of activity of the system.

12. A method according to any one of the preceding claims wherein the expected values are evaluated, at least in part, on the basis of previous actual values.

13. A method according to any one of the preceding claims wherein the expected values can be altered, whereby account may be taken of exceptional circumstances likely to affect an otherwise normal level of activity.

14. A method of monitoring the activity of a computer system substantially in accordance with any one of the preceding claims.

15. A method according to Claim 14 wherein the time-dependent variable is associated with one of the system's processor, memory, non-volatile data storage devices and network capabilities.

16. A method of monitoring the activity of a computer system, comprising
a) procuring a range of expected values of a time-dependent variable of the system, the range having upper and lower limits relating to expected operating parameters of the system;
b) procuring an actual value of the system's time-dependent variable, and
c) comparing the actual value with the expected range.

17. A method of monitoring the activity of a computer system, whereby system failure, overload, component failure or performance loss may be predicted, comprising:
a) procuring a range of expected values of a time-dependant variable of the system such as data processing speed, memory usage/allocation, network activity and storage device usage/activity, the range having upper and lower limits relating to expected operating parameters of the system, whereby a normal level of activity may be established;
b) procuring an actual and/or real-time value of the system's time-dependent variable;
c) comparing the actual and/or real-time value with the expected range to establish whether the system is operating at a normal level of activity and, in the event that the system is found not to be operating at a normal level;
d) generating an advisory signal such as an alarm, whereby appropriate remedial action may be taken.

18. A method according to Claim 17 wherein the remedial action involves at least one of a system restart, a system switchover and an expected range override.

19. Apparatus for monitoring the activity of a system, comprising;
a) a range procurement element operative to procure a range of expected values of a time-dependent variable of the system, the range having upper and lower limits relating to expected operating parameters of the system,
b) an actual element procurement element operative to procure an actual value of the system's time-dependent variable, and
c) a comparator element operative to compare the actual value with the expected range.

20. Apparatus for monitoring the activity of a computer system and thus to predict system failure, overload, component failure or performance loss, for example, comprising:
a) a range procurement element operative to procure a range of expected values of a time-dependent variable of the system such as data processing speed, memory usage/allocation, network activity and storage device usage/activity, the range having upper and lower limits relating to expected operating parameters of the computer system, whereby a normal level of activity may be established;
b) an actual value procurement element operative to procure an actual and/or real-time value of the computer system's time dependent variable;
c) a comparator element operative to compare the actual and/or real-time value with the expected range, to establish whether the system is operating at a normal level of activity, and
d) an advisory signal generator which, in the event that the system is found not to be operating at a normal level, is operative to generate an advisory signal such as an alarm, to allow appropriate remedial action to be taken.
